# EUROPÄISCHE PATENTSCHRIFT

(11) **EP 1 083 084 B1**
(45) Veröffentlichungstag und Bekanntmachung des Hinweises auf die Patenterteilung: **08.02.2006**
(21) Anmeldenummer: 00117979.5
(22) Anmeldetag: 22.08.2000
(51) Int. Cl.: B60N 2/28

(54) **Kinderrückhaltesystem für Kraftfahrzeuge**
Child-restraint system for a motor vehicle
Dispositif de maintien d'enfant pour automobile

(30) Priorität: 10.09.1999 DE 19943231
(43) Veröffentlichungstag der Anmeldung: 14.03.2001
(73) Patentinhaber: Schräder, Margarete, 95352 Marktleugast (DE)
(72) Erfinder: Schräder, Margarete, 95352 Marktleugast (DE)
(74) Vertreter: Tergau & Pohl Patentanwälte

(56) Entgegenhaltungen:
- DE-A- 19 848 231
- SE-C- 511 057

## Beschreibung

Die Erfindung betrifft ein Kinderrückhaltesystem für Kraftfahrzeuge, welches in Fixierstellung mit dem jeweiligen Schnapper zweier nebeneinander wirksamer Schnappverbindungen durch eine zentrale Griffbetätigung lösbar zwei separate, in einer Sitzposition des Fahrzeuges fahrzeugfeste Ankerbügel formschlüssig umfasst. Ein derartiges Kinderrückhaltesystem ist beispielsweise aus der SE-C-511 057 bekannt.

Der aus der SE 511 057 C bekannte Kindersitz kann nach vorne gerichtet auf einem Fahrzeugsitz befestigt werden und umfasst zwei Verbindungselemente zur Zusammenwirkung mit einem fest im Fahrzeug angebrachten Verankerungsmittel. Die Verbindungselemente sind an einem Ende einer Grundplatte angeoordnet, wobei der Kindersitz auf der Grundplatte manuell verstellbar ist.

Ein weiteres Kinderrückhaltesystem für Kraftfahrzeuge ist beispielsweise aus der DE 198 48 231 A1 bekannt. Ein Tragkörper des Kindersitzes weist einen begrenzt schwenkbar gelagerten Sperrkörper zum Festlegen eines mit dem Fahrzeug verbundenen Bügels innerhalb des Tragkörpers auf. Der Sperrkörper ist in Schließstellung durch einen in dieser Stellung sichernden Körper beaufschlagt.

Es wird bereits weltweit damit begonnen, Kraftfahrzeuge mit in einer Sitzposition des Fahrzeuges fahrzeugfesten Ankerbügeln auszustatten. Diese Ankerbügel erleichtem es dem Benutzer, Kinderrückhaltesysteme, z.B. Autokindersitze, Kinderliegen o.dgl. in einfacher Weise in ihrer Sitzposition fahrzeugfest schnappzuverbinden. Diese Möglichkeit erleichtert es dem Benutzer, dasselbe Kinderrückhaltesystem in unterschiedlichen Sitzpositionen und in unterschiedlichen Fahrzeugen sicher zu applizieren.

Die Fixierung derartiger Kinderrückhaltesysteme ist nur sicher, wenn beide Schnapper ordnungsgemäß fixiert sind. Bei einem bekannten Kinderrückhaltesystem der eingangs genannten Art ist lediglich eine zentrale Funktionsanzeige für die beiden Schnappverbindungen vorgesehen. Es hat sich indessen herausgestellt, dass diese zentrale Funktionsanzeige auch dann eine formschlüssige Umfassung beider fahrzeugfesten Ankerbügel durch die beiden Schnapper signalisiert, wenn die Formschlussverbindung nur bei einem Schnapper und nicht bei beiden Schnappern vorliegt.

Gemäß DE 299 03 414 U1 ist es grundsätzlich bekannt, das Vorliegen einer ordnungsgemäßen, formschlüssigen Umfassung eines der fahrzeugfesten Ankerbügel durch einen Schnapper durch eine von dem Schnapper als Gegenfläche mechanisch gesteuerte Anzeigevorrichtung zu betätigen. Diese Vorrichtung bedient sich jedoch einer verhältnismäßig komplizierten Anzeigeelektronik.

Der Erfindung liegt die Aufgabe zugrunde, ein Kinderrückhaltesystem der eingangs genannten Art zu entwickeln, bei welchem die Unzulänglichkeiten der bekannten Lösungen nicht bestehen. Diese Aufgabe wird durch Anspruch 1 gelöst. Jeder der beiden Schnappverbindungen ist also eine gesonderte, vom Schnapper als Gegenfläche mechanisch gesteuerte Anzeigescheibe zugeordnet. Dadurch ist die Funktionsposition beider Schnapper jeweils gesondert erkennbar und das gemäß Anspruch 2 an einer benutzerseitig besonderes gut erkennbaren Stelle.

Die weitere Erfindung betrifft eine besonders einfache konstruktive Lösung des Erfindungsgedankens. Das Lösungsprinzip dieser Aufgabe ist Gegenstand des Anspruches 3.

Der Gegenstand der Erfindung wird anhand der Figuren beispielsweise erläutert.
Es zeigen:
- Fig. 1: einen Fahrzeug-Rücksitz mit diesem Sitz zugeordnet zwei fahrzeugfesten Ankerbügeln, die langläufig unter dem Namen "ISOFIX-System" bekannt sind,
- Fig. 2: eine Draufsicht auf den Tragrahmen des Rückhaltesystems bei vorschriftsmäßig mit beiden fahrzeugfesten Ankerbügeln verschnappten Schnappern bzw. Schnappverbindungen,

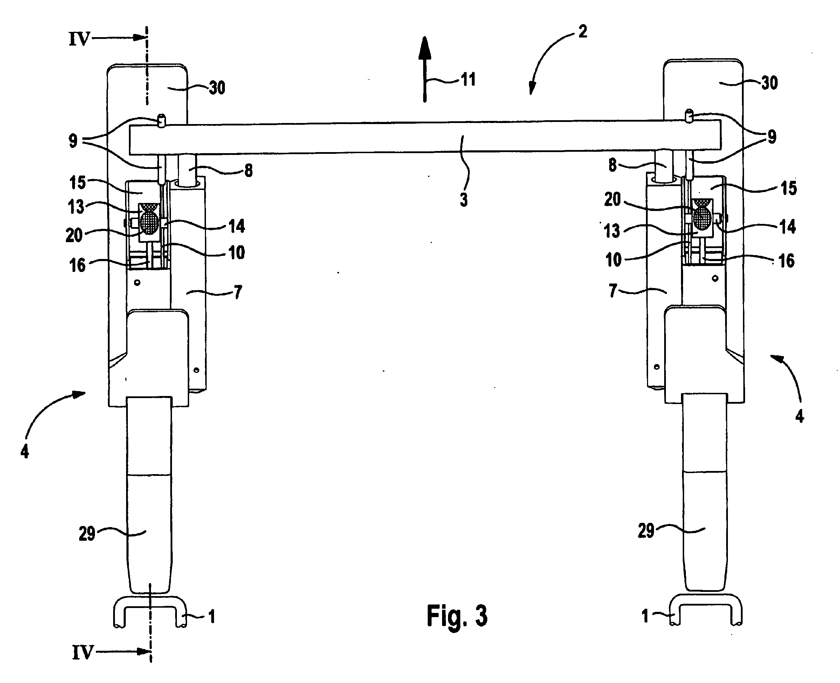

- Fig. 3: eine Draufsicht analog Fig. 2 auf den entriegelten Tragrahmen,
- Fig. 4: einen Längsschnitt entsprechend der Linie IV-IV in Fig. 3 durch einen der beiden Schnapparme des entriegelten Tragrahmens,
- Fig. 5: einen Schnitt analog Fig. 4 durch einen Schnapparm des in funktionstüchtiger Verriegelungsstellung befindlichen Tragrahmens entsprechend der Schnittlinie V-V in Fig. 2,
- Fig. 6: eine perspektivische Draufsicht auf das Schnappende des Schnappers in dessen bezüglich des Ankerbügels aufnahmebereiter Öffnungsstellung,
- Fig. 7: eine Darstellung analog Fig. 6 in Schnappverriegelungsstellung des Schnappers.
- Fig. 8: einen Längsschnitt durch das in aufnahmebereiter Öffnungsstellung befindliche Schnappende analog Fig.6,
- Fig. 9: einen Längsschnitt durch das in verschnappter Verriegelungsstellung des Ankerbügels befindliche Schnappende des Schnapparms,

Das erfindungsgemäße Kinderrückhaltesystem ist für den Einsatz in Kraftfahrzeugen bestimmt, die mit Sitzen ausgestattet sind, welche fahrzeugfeste Ankerbügel 1 enthalten. Diese Ankerbügel 1 dienen zur wahlweisen Fixierung eines Kinderrückhaltesystems mittels des in dieses System integrierten Tragrahmens 2. Der Tragrahmen 2 kann einen Sitz oder eine Liegeschale oder einen anderweitigen Rezeptor für den verkehrssicheren Transport eines Kindes tragen und bildet mit einem solchen unmittelbaren Transportelement für das Kind eine integrale Einheit.

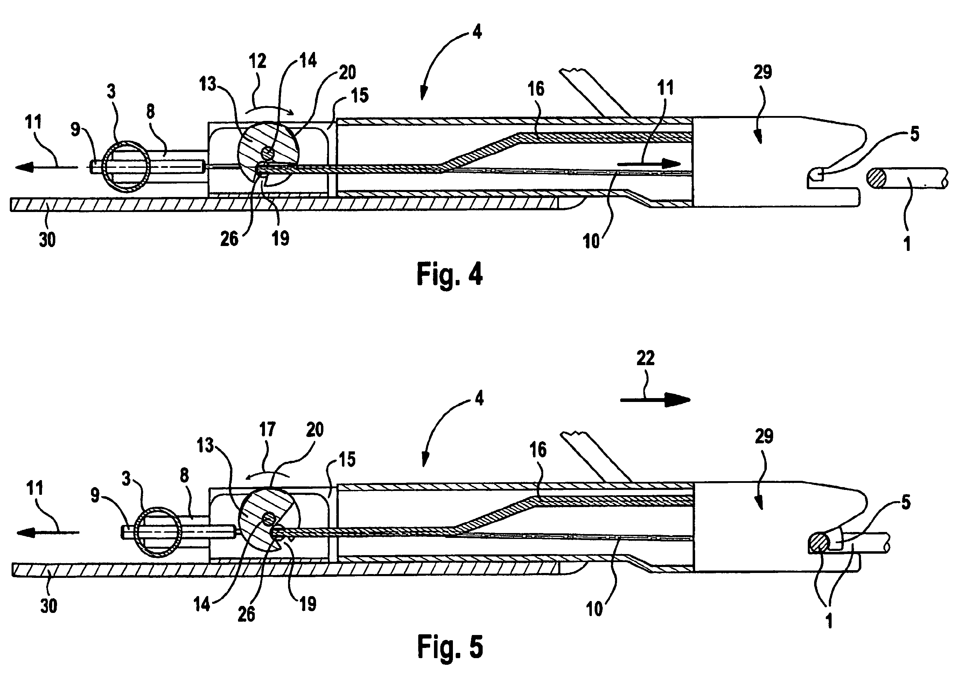

Der Tragrahmen 2 enthält zwei zueinander mit Abstand zwischen sich parallele Schnapparme 4 mit an ihrem einen Ende als Verbindungsmittel mit den Ankerbügeln 1 schwenkbar gelagerten Schnappern 5. Die Schnapper 5 sind um die Schwenkachse 6 schwenkbar in einem Lagergehäuse 18 an den Enden der Schnapparme 4 gelagert. Diese Gebilde werden auch als Connectoren 29 bezeichnet. Die Schnapparme 4 des Tragrahmens 2 sind als im Inneren hohle Längsstreben ausgestaltet (Fig. 4,5,8,9) und sie liegen in Verbindungsstellung mit den Ankerbügeln 1 mittels Flachbändern 30 abgestützt auf dem Sitzpolster des Fahrzeugsitzes auf. Die Wände der die Schnapparme 4 bildenden Längsstreben umgeben wesentliche Funktionsteile der Schnappmechanik nach Art von Gehäusewänden.

Den Schnappern 5 abgewandt abstehend sind parallel zur Erstreckungsrichtung der Schnapparme 4 ausgerichtete Längsführungen 7 für die Führungsstreben 8 eines zentralen Betätigungsgriffes 3 an die Schnapparme 4 angeflanscht.

Der quer zu den beiden Schnapparmen 4 verlaufende, zwischen den Führungsstreben 8 positionierte und durch die Führungsstreben 8 parallel zu den Schnapparmen 4 längsverschiebbar geführte Betätigungsgriff 3 trägt an seinen beiden Enden Fixierungen 9 jeweils eines Seilzuges 10. Die Fixierungen 9 können auch eine Längenverstelleinrichtung für die Seilzüge 10 enthalten.

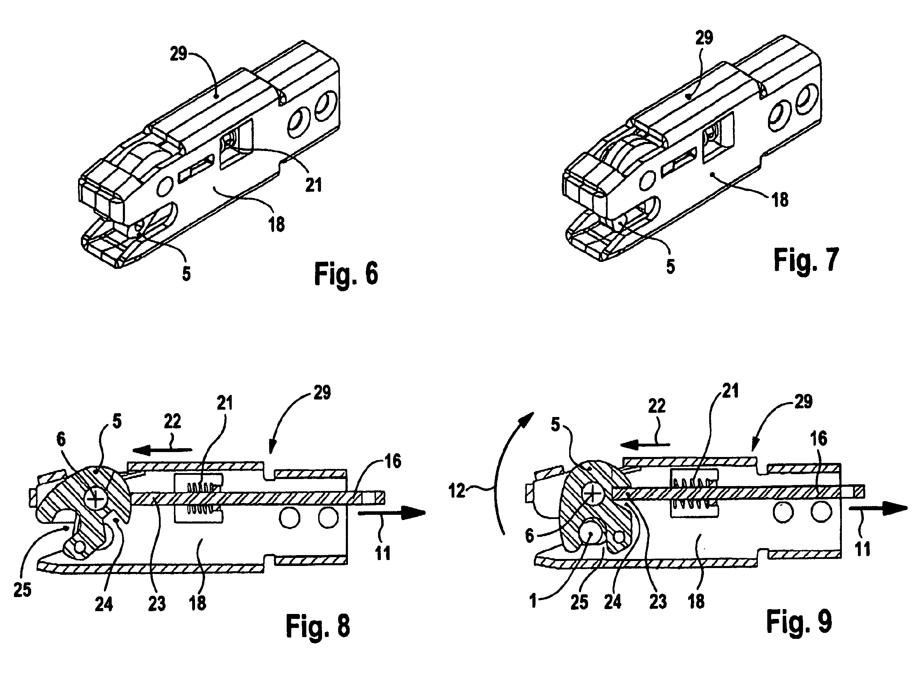

Der jeweilige Seilzug 10 ist an seinem schnapperseitigen Ende mit einer nicht näher dargestellten Öffnungseinrichtung verbunden, die bei einem Zug auf den Griff 3 in Zugrichtung 11 eine im Uhrzeigersinn 12 wirksame Schwenköffnungs-Druckbewegung auf den in Schnappverriegelungsstellung befindlichen Schnapper 5 (Fig. 9) ausübt. Dadurch wird der Schnapper 5 in die aus Fig. 8 ersichtliche Öffnungs- bzw. Freigabestellung bezüglich des umfassten Ankerbügels 1 geschwenkt. Fig. 9 zeigt schließlich eine voll funktionsfähige Schnappverbindung zwischen dem Schnapper 5 und dem fahrzeugfesten Ankerbügel 1. In dieser Schnappverbindungsstellung ist der Ankerbügel 1 fest am Ende des Schnapparmes 4 fixiert, während die im Uhrzeigersinn 12 erfolgte, über den Seilzug 10 eingeleitete Schwenkung des Schnappers 5 um seine Schwenkachse 6 die Schnappverbindung mit dem Ankerbügel 1 frei gibt.

Des Weiteren ist in den beiden Schnapparmen 4 jeweils im Bereich der den Schnappern 5 abgewandten und dem Griff 3 zugewandten Enden der Schnapparme 4 jeweils eine mittelbar vom Schnapper 5 als Gegenfläche mechanisch gesteuerte Anzeigescheibe 13 um die mit dem jeweiligen Schnapparm 4 fest verbundene Drehachse 14 schwenkbar gelagert. Die Anzeigescheibe 13 ist dabei als Anzeigedrehteil ausgebildet und die Funktionsanzeige befindet sich auf dem Umfang dieses Anzeigedrehteils. Der Umfang der Anzeigescheibe 13 ist von außen durch ein Sichtfenster 15 erkennbar. Das Sichtfenster 15 ist an dem in Fixierstellung den Ankerbügeln 1 abgewandten Ende der Schnapparme 4 aus der oberen Wand des jeweiligen Schnapparmes ausgespart. Die als Anzeigedrehteil ausgebildete Anzeigescheibe 13 wird durch einen nach Art einer Schubkurbelstange wirksamen Anzeigestab 16 zwischen einer die Nichtfunktionsfähigkeit der Verankerung anzeigenden Ruhe- bzw. Öffnungsstellung (Fig. 4) und einer eine funktionsfähige Verankerung anzeigenden Verrastungsstellung (Fig. 5) mechanisch bewegt. Die Verrastungsstellung ist die im Gegenuhrzeigersinn 17 erreichte Extremstellung der Anzeigescheibe 13 innerhalb des Sichtfensters 15 des Schnapparmes 4. Der Anzeigestab 16 ist sowohl innerhalb des zugeordneten Schnapparmes 4 als auch innerhalb des zugeordneten Lagergehäuses 18 des zugeordneten Schnappers 5 längsverschiebbar gekapselt. Er liegt mit seinem zugewandten Ende in einer radialen Schlitzung 19 der als Anzeigedrehteil ausgebildeten Anzeigescheibe 13 exzentrisch ein. Auf dem Umfang des Anzeigedrehteils 13 ist die Anzeige durch das Sichtfenster 15 von oben erkennbar. Das in Verriegelungsstellung oben liegende Umfangssegment 20 (Fig. 5) ist dazu beispielsweise partiell mit einer die Erreichung der Fixierstellung anzeigenden Farbcodierung in grüner Farbe gekennzeichnet.

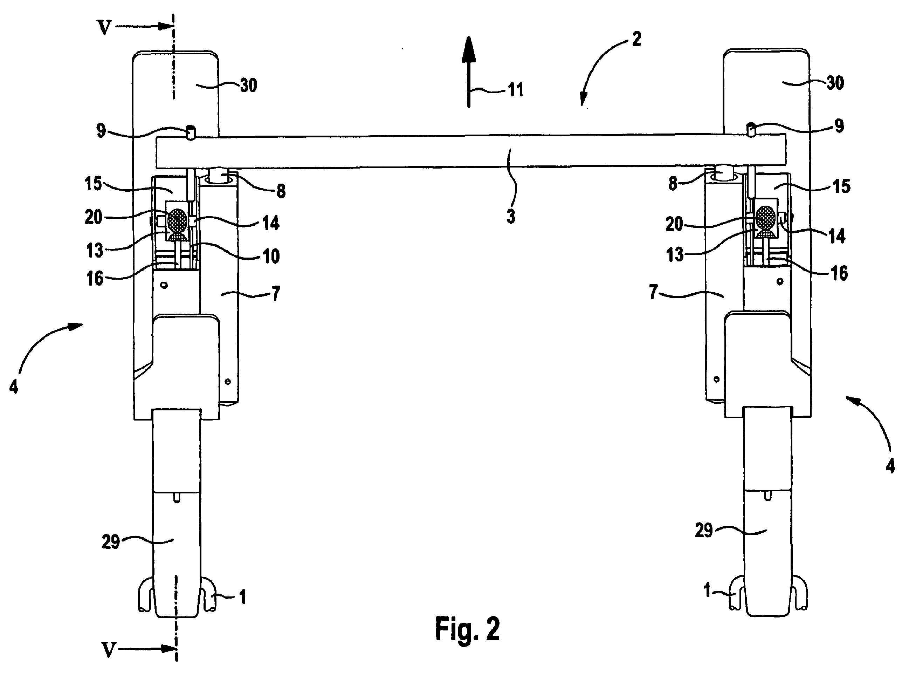

An seinem dem Schnapper 5 zugewandten Ende steht der Anzeigestab 16 unter einem am Lagergehäuse 18 abgestützten Druck einer Rückstellfeder 21, die den Anzeigestab 16 in Längsrichtung 22 gegen den Umfang des Schnappers 5 beaufschlagt. In Fixierstellung des Schnappers 5 (Fig. 9) sorgt der Druck der Rückstellfeder 21 für ein Einfallen des äußeren Endes 23 des Anzeigestabes 16 in eine in Fixierstellung des Schnappers 5 aufnahmebereite Ausnehmung 24 am der Schnappaufnahme 25 abgewandten Rücken des Schnappers 5. Dadurch wird die Anzeigescheibe 13 in ihre die Farbcodierung "grün" durch das Sichtfenster 15 zeigende Drehstellung verdreht (Fig. 2). Das zeigt dem Benutzer an, dass die Schnappfixierung des jeweiligen Schnapparmes 4 am Ankerbügel 1 vorschriftsmäßig verriegelt ist.

Durch einen in Zugrichtung 11 auf den Griff 3 ausgeübten Zug wird der Seilzug 10 in Öffnungsrichtung betätigt. Er zieht auch den Anzeigestab 16 aus seiner Eingriffsstellung bezüglich der Ausnehmung 24 (Fig. 9) heraus und schwenkt den Schnapper 5 im Uhrzeigersinn 12 (Fig. 9) aus seiner den Ankerbügel 1 fixierenden Verriegelungsstellung in seine Freigabestellung (Fig. 8). Diese Rückverschiebung des Anzeigestabes 16 in Zugrichtung 11 und gegen die Längsrichtung 22 bewirkt durch das dem Ankerbügel 1 abgewandte Ende 26 des Anzeigestabes 16 eine partielle Rückdrehung der Anzeigescheibe 13 im Uhrzeigersinn 12. Dadurch erscheint im Sichtfenster 15 anstelle des die Verriegelungsstellung anzeigenden grünen Farbcodes ein die Entriegelungsstellung anzeigender, roter Farbcode.

Der Anzeigestab 16 ist zu seiner Längenjustierung längenverstellbar. Dazu ist er durch eine mit einem Schraubgewinde versehene Gewindestange gebildet, die im Bereich des dem Schnapper 5 zugewandten Endes (nicht dargestellt) mit einer Innengewindeaufnahme korrespondiert, die das schnapperseitige Ende des Anzeigestabes 16 bildet. Zur Blockierung der Längenverstellbarkeit ist auf dieser Gewindestange eine gegen die Gewindeaufnahme konterbare Kontermutter aufgeschraubt.

Zum Andocken des Tragrahmens 2 mit seinen beiden Schnapparmen 4 an den zugeordneten Ankerbügeln 1 wird wie folgt vorgegangen:
Der Betätigungsgriff 3 ist vom vorausgegangenen Lösevorgang noch in Zugrichtung 11 angezogen oder er wird angezogen. Dadurch ziehen die beiderseitigen Seilzüge 10 die beiden endseitigen Schnapper 5 in ihre Öffnungs- bzw. Freigabestellung (Fig. 8). Dabei sind bzw. werden gleichzeitig die beiden in den Schnapparmen 4 längsverschiebbaren Anzeigestäbe 16 entgegen dem jeweiligen Druck der Rückstellfedern 21 in den beiden Schnappern abgewandter Richtung entgegen der Längsrichtung 22 zurückgezogen. Diese Rückziehbewegung wird durch die jeweiligen Anzeigestäbe 16 als Drehantrieb auf die zugeordneten Anzeigescheiben 13 übertragen. Diese werden im Uhrzeigersinn 12 partiell zurückgedreht, so dass sie die in Fig. 4 erkennbare Drehstellung erreichen. In dieser Drehstellung erscheint auf dem Umfang der Anzeigescheibe 13 innerhalb des Sichtfensters 15 z.B. ein roter Farbcode. Dieser signalisiert dem Benutzer, dass keine Schnappverbindung bzw. Fixierung des Tragrahmens 2 an den beiden Ankerbügeln 1 vorliegt und dieses Signal ist wegen der den Schnappern 5 abgewandten Positionierung der Anzeigescheiben 13 für die Bedienungsperson besonders gut erkennbar.

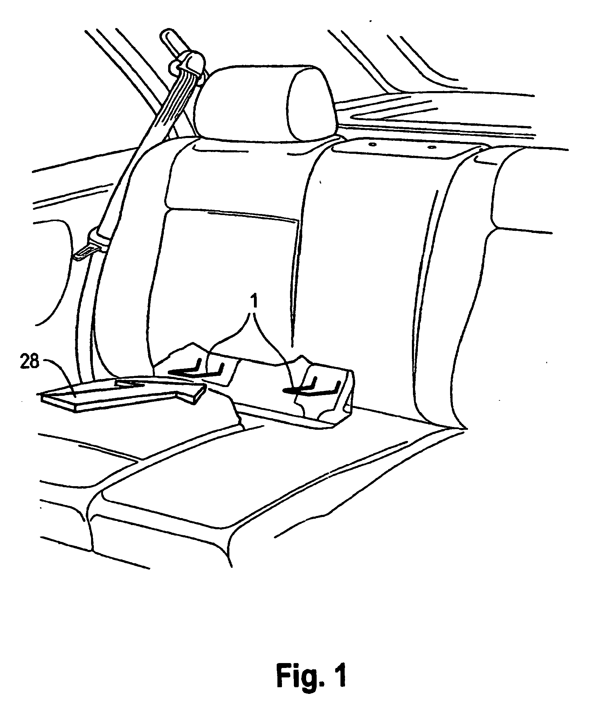

Beim Andocken wird der Tragrahmen 2 mit den Ankerbügeln 1 jeweils zugewandten Schnapparmen 4 in Pfeilrichtung 28 (Fig. 1) auf die Querhäupter der Ankerbügel 1 aufgeschoben. Dabei tauchen die Querhäupter der Ankerbügel 1 in die beiden aufnahmebereiten Schnappaufnahmen 25 der Schnapper 5 ein und diese sind an den Andockenden der Schnapparme 4 angeordnet. Diese Betätigungsenden sind Teile jeweils eines Connectors 29, der das Gehäuse 18 des Verriegelungsmechanismus bildet und der jeweils auf das verriegelungsseitige Ende eines Schnapparmes 4 aufgesetzt ist bzw. das verriegelungsseitige Ende eines Schnapparmes 4 bildet. Durch das Aufschieben (Andocken) des Tragrahmens 2 mit den Schnappaufnahmen 25 der Schnapper 5 auf die Ankerbügel 1 werden die Schnapper 5 entgegen dem Uhrzeigersinn 12 in ihre Fixierstellung (Fig. 9,2) zurückgeschwenkt. Dadurch kommen die Anzeigestäbe 16 mit ihren äußeren Enden 23 in Überdeckung mit den Ausnehmungen 24 am Umfang der beiden Schnapper 5. Durch den Rückstelldruck der Rückstellfedern 21 werden die Anzeigestäbe 16 mit ihren äußeren Enden 23 in die aufnahmebereiten Ausnehmungen 24 hineingeschoben. Diese Schiebebewegung wird durch das innere Ende 26 der beiden Anzeigestäbe 16 in Form einer partiellen Drehung im Gegenuhrzeigersinn 17 auf beide Anzeigescheiben 13 übertragen. Dadurch erscheint nunmehr der grüne, eine sichere Verriegelung beider Schnapper 5 mit den Ankerbügeln 1 signalisierende Farbcode im jeweiligen Sichtfenster der beiden Schnapparme 4. Dieser Code gibt die Sicherheit, dass beide Schnapparme 4 des Tragrahmens 2 an den beiden Ankerbügeln 1 vorschriftsmäßig verriegelt sind.

Zum Entriegeln wird der Bügel 3 in Öffnungsrichtung 11 gezogen. Die beiden Anzeigestäbe 16 werden mit ihren äußeren Enden 23 aus den Ausnehmungen 24 am Umfang der Schnapper 5 herausgezogen und diese Zugbewegung überträgt weiter eine Schwenkbewegung auf die beiden Schnapper 5 im Uhrzeigersinn 12 vom Sitz, so dass diese die Öffnungsstellung gemäß Fig. 8 einnehmen und die Ankerbügel 1 freigeben. Der Tragrahmen 2 kann jetzt einfach (Fig. 8,9) entfernt werden. Mit der Überführung der Schnapper 5 in ihre Öffnungsstellung werden die beiden Anzeigescheiben 13 in ihre die Freigabe- bzw. Öffnungsstellung innerhalb des Sichtfensters 15 signalisierende Position zurückgeschwenkt.

### Bezugszeichenliste

- 1: Ankerbügel
- 2: Tragrahmen
- 3: Betätigungsgriff
- 4: Schnapparm
- 5: Schnapper
- 6: Schwenkachse
- 7: Längsführung
- 8: Führungsstrebe
- 9: Fixierung
- 10: Seilzug
- 11: Zugrichtung
- 12: Uhrzeigersinn
- 13: Anzeigescheibe
- 14: Drehachse
- 15: Sichtfenster
- 16: Anzeigestab
- 17: Gegenuhrzeigersinn
- 18: Lagergehäuse
- 19: Schlitzung
- 20: Umfangssegment
- 21: Rückstellfeder
- 22: Längsrichtung
- 23: äußeres Ende
- 24: Ausnehmung
- 25: Schnappaufnahme
- 26: inneres Ende
- 28: Pfeilrichtung
- 29: Connector
- 30: Flachband

## Patentansprüche

1. Kinderrückhaltesystem für Kraftfahrzeuge, dessen Tragrahmen (2) in Fixierstellung mit dem jeweiligen Schnapper (5) zweier nebeneinander wirksamer Schnappverbindungen durch eine zentrale Griffbetätigung (3) lösbar zwei separate, in einer Sitzposition des Fahrzeuges fahrzeugfeste Ankerbügel (1) formschlüssig umfasst, wobei beide Schnappverbindungen zur Kenntlichmachung einer Fixierstellung jeweils eine gesonderte, von dem Schnapper (5) als Gegenfläche mechanisch gesteuerte Anzeigescheibe (13) betätigen,
**dadurch gekennzeichnet,**
**dass** der zentrale, eine Schnappfixierung beider Ankerbügel (1) gemeinsam lösende Betätigungsgriff (3) mit seinen beiden Enden an den beiden Schnapparmen (4) in öffnender Gegenrichtung zum Schnapper (5) längsverschiebbar geführt und über einen die Öffnungsbewegund des Schnappers und die damit verbundene Anzeigeveränderung bewirkenden Seilzug (10) mit dem Schnapper (5) funktionsmäßig verbunden ist.

2. Kinderrückhaltesystem nach Anspruch 1,
**dadurch gekennzeichnet,**
**dass** die Anzeigescheiben (13) an einer den Schnappern (5) abgewandten Seite des Tragrahmens (2), insbesondere jeweils eines Schnapparmes (4) positioniert sind.

3. Kinderrückhaltesystem nach Anspruch 1 oder 2
**dadurch gekennzeichnet,**
**dass** eine Anzeigescheibe (13) auf dem Umfang eines im Gehäuse drehbar gelagerten Anzeigedrehteils ausgebildet ist,
welches bei ordnungsgemäßer Verankerung durch einen
- nach Art einer Schubkurbelstange wirksamen und
- vom Schnapper (5) als Gegenfläche gegen einen konstanten Rückstellfederdruck in seiner Längsrichtung verschobenen
Anzeigestab (16) aus seiner die Nichtfunktionsfähigkeit der Verankerung anzeigenden Ruhestellung in eine die funktionsfähige Verankerung anzeigende Verrastungsstellung gedreht wird.

4. Kinderrückhaltesystem nach Anspruch 3,
**dadurch gekennzeichnet,**
**dass** der Anzeigestab (16) innerhalb eines Schnapparmes (4) und/oder eines Lagergehäuses (18) des zugeordneten Schnappers (5) längsverschiebbar angeordnet ist.

5. Kinderrückhaltesystem nach einem der Ansprüche 3 oder 4,
**dadurch gekennzeichnet,**
**dass** zur Übertragung der Anzeigebewegung das anzeigeseitige Ende des Anzeigestabes (16) in der Anzeigescheibe (13), insbesondere in einer im Wesentlichen radialen Schlitzung (19) des Anzeigedrehteiles (13) exzentrisch drehgelagert einliegt.

6. Kinderrückhaltesystem nach einem der Ansprüche 3 bis 5
**dadurch gekennzeichnet,**
**dass** der Anzeigestab (16) in ordnungsemäßer Fixierstellung des zugeordneten Schnappers (5) mit seinem der Anzeigescheibe bzw. Anzeigedrehteil (13) abgewandten Ende unter dem Rückstellfederdruck in eine durch die Schnapperposition aufnahmebereite Ausnehmung (24) am der Schnappaufnahme (25) abgewandten Rücken des Schnappers (5) einfällt bzw. einliegt.

7. Kinderrückhaltesystem nach einem der Ansprüche 3 bis 6,
**dadurch gekennzeichnet,**
**dass** der Anzeigestab (16) zu seiner Längenjustierung längenverstellbar ist.

8. Kinderrückhaltesystem nach Anspruch 7,
**dadurch gekennzeichnet,**
**dass** der Anzeigestab (16) durch eine mit einem Schraubgewinde versehene Gewindestange gebildet ist.

9. Kinderrückhattesystem nach Anspruch 8,
**gekennzeichnet durch**
eine zur Blockierung der Längenverstellbarkeit auf die Gewindestange aufgeschraubte, gegen die Gewindeaufnahme konterbare Kontermutter.

10. Kinderrückhaltesystem nach einem der vorhergehenden Ansprüche,
**dadurch gekennzeichnet,**
**dass** die Anzeigescheibe (13) bzw. der Umfang des Anzeigedrehteiles (13) durch eine ein Sichtfenster (15) aufweisende Gehäusewand des Schnapparmes (4) abgedeckt ist und dass die Erreichung der Fixierstellung durch eine Farbcodierung des im Sichtfenster (15) aufscheinenden Segmentes der Anzeigescheibe (13) bzw. Umfangssegmentes (20) des Anzeigedrehteils (13) angezeigt wird.

## Claims

1. Child-restraint system for motor vehicles, the supporting frame (2) of which in the fixing position, with the respective snap catch (5) of two snap connections which are active next to one another, surrounds positively and releasably by way of central handle actuation (3) two separate anchor brackets (1) which are fixed to the vehicle in a seat position of the vehicle, the two snap connections in each case, for indicating a fixing position, actuating a separate indicating disc (13) controlled mechanically by the snap catch (5) as a countersurface, **characterized in that** the central actuation handle (3), which releases a snap-fixing of the two anchor brackets (1) together, is guided longitudinally displaceably with its two ends on the two snap arms (4) in the opening opposite direction in relation to the snap catch (5) and is connected functionally to the snap catch (5) via a cable pull (10) which brings about the opening movement of the snap catch and the associated indication change.

2. Child-restraint system according to Claim 1, **characterized in that** the indicating discs (13) are positioned on a side of the supporting frame (2), in particular in each case of a snap arm (4), facing away from the snap catches (5).

3. Child-restraint system according to Claim 1 or 2, **characterized in that** an indicating disc (13) is designed on the periphery of a rotary indicating part which is mounted rotatably in the housing and which, when anchored properly, is rotated out of its rest position indicating non-operativeness of the anchoring into a locked position indicating operative anchoring by an indicating rod (16) which is
- active in the manner of a push connecting rod and
- displaced in its longitudinal direction by the snap catch (5) as a countersurface counter to a constant restoring spring force.

4. Child-restraint system according to Claim 3, **characterized in that** the indicating rod (16) is arranged longitudinally displaceably inside a snap arm (4) and/or a bearing housing (18) of the associated snap catch (5).

5. Child-restraint system according to Claim 3 or 4, **characterized in that**, for transmission of the indication movement, the indication-side end of the indicating rod (16) is located in an eccentrically rotatably mounted way in the indicating disc (13), in particular in an essentially radial slot (19) of the rotary indicating part (13).

6. Child-restraint system according to one of Claims 3 to 5, **characterized in that**, in the proper fixing position of the associated snap catch (5), the indicating rod (16) engages or is located, under the restoring spring pressure, with its end facing away from the indicating disc or rotary indicating part (13) in a recess (24), which is ready-to-receive by virtue of the snap catch position, on the rear, which faces away from the snap receiver (25), of the snap catch (5).

7. Child-restraint system according to one of Claims 3 to 6, **characterized in that** the indicating rod (16) is length-adjustable for its length adjustment.

8. Child-restraint system according to Claim 7, **characterized in that** the indicating rod (16) is formed by a threaded rod provided with a screw thread.

9. Child-restraint system according to Claim 8, **characterized by** a lock nut which, for blocking the length-adjustability, is screwed onto the threaded rod and can be locked against the threaded receiver.

10. Child-restraint system according to one of the preceding claims, **characterized in that** the indicating disc (13), or the periphery of the rotary indicating part (13), is covered by a housing wall, comprising an inspection window (15), of the snap arm (4), and **in that** the fixing position having been reached is indicated by colour-coding of that segment of the indicating disc (13), or peripheral segment (20) of the rotary indicating part (13), appearing in the inspection window (15).

## Revendications

1. Système de retenue pour enfant pour véhicules à moteur, dont le cadre porteur (2) comprend par complémentarité de formes deux étriers d'ancrage (1) séparés, solidaires du véhicule dans une position assise du véhicule, détachables dans la position de fixation avec l'accouplement à déclic (5) respectif de deux assemblages par emboîtement efficaces l'un à côté de l'autre par un actionnement de poignée (3) central, les deux assemblages par emboîtement actionnant pour l'identification d'une position de fixation respectivement un disque d'affichage (13) séparé, commandé mécaniquement par l'accouplement à déclic (5) comme contre-surface,
**caractérisé en ce que**
la poignée d'actionnement (3) centrale, déclenchant une fixation d'emboîtement des deux étriers d'ancrage (1) conjointement est guidée de façon coulissante dans le sens de la longueur avec ses deux extrémités sur les deux bras d'encliquetage (4) dans le sens inverse d'ouverture par rapport à l'accouplement à déclic (5) et est reliée au niveau fonctionnel à l'accouplement à déclic au moyen d'une commande par câble (10) effectuant le déplacement d'ouverture de l'accouplement à déclic (5) et la modification d'affichage qui en résulte.

2. Système de retenue pour enfant selon la revendication 1,
**caractérisé en ce que**
les disques d'affichage (13) sont positionnés sur un côté, opposé aux accouplements à déclic (5), du cadre porteur (2), en particulier respectivement d'un bras d'encliquetage (4).

3. Système de retenue pour enfant selon la revendication 1 ou 2,
**caractérisé en ce que**
un disque d'affichage (13) est réalisé sur le pourtour d'une partie rotative d'affichage logée de façon tournante dans le boîtier,
qui est tourné, dans le cas d'un ancrage correct, par une barre d'affichage (16)
- efficace à la façon d'une bielle-manivelle de poussée et
- déplacée par l'accouplement à déclic (5) comme contre-surface contre une pression constante de ressort de rappel dans sa direction longitudinale
de sa position de repos indiquant le non fonctionnement de l'ancrage dans une position d'arrêt indiquant l'ancrage fonctionnel.

4. Système de retenue pour enfant selon la revendication 3,
**caractérisé en ce que**,
la barre d'affichage (16) est disposée à l'intérieur d'un bras d'encliquetage (4) et/ou d'un boîtier de palier (18) de l'accouplement à déclic (5) attribué de façon à pouvoir coulisser dans la longueur.

5. Système de retenue pour enfant selon l'une quelconque des revendications 3 ou 4,
**caractérisé en ce que**,
pour la transmission du mouvement d'affichage, l'extrémité côté affichage de la barre d'affichage (16) est insérée maintenue tournante de façon excentrée dans le disque d'affichage (13), en particulier dans une fente (19) sensiblement radiale de la partie tournante d'affichage (13).

6. Système de retenue pour enfant selon l'une quelconque des revendications 3 à 5,
**caractérisé en ce que**
la barre d'affichage (16) s'engage lorsque l'accouplement à déclic (5) attribué est dans la position de fixation correcte, par son extrémité opposée au disque d'affichage, ou s'insère à la partie tournante d'affichage (13) sous l'effet de la pression du ressort de rappel dans un évidement (24) prête pour la réception par la position d'accouplement à déclic sur l'arrière, opposé au logement d'encliquetage (25), de l'accouplement à déclic (5).

7. Système de retenue pour enfant selon l'une quelconque des revendications 3 à 6,
**caractérisé en ce que**,
la barre d'affichage (16) est réglable en longueur pour son ajustage en longueur.

8. Système de retenue pour enfant selon la revendication 7,
**caractérisé en ce que**
la barre d'affichage (16) est formée par une tige filetée dotée d'un filetage à vis.

9. Système de retenue pour enfant selon la revendication 8,
**caractérisé par**
un contre-écrou vissé sur la tige filetée pour le blocage de la possibilité de déplacement en longueur et pouvant être bloqué par contre-écrou contre le logement de filetage.

10. Système de retenue pour enfant selon l'une quelconque des revendications précédentes,
**caractérisé en ce que**,
le disque d'affichage (13) respectivement le pourtour de la partie rotative d'affichage (13) est recouverte par une paroi de boîtier, présentant une fenêtre d'inspection (15), du bras d'encliquetage (4) et **en ce que** le moment où l'on atteint la position de fixation est indiqué par un codage en couleur du segment apparaissant dans la fenêtre d'inspection (15) du disque d'affichage (13) ou du segment périphérique (20) de la partie tournante d'affichage (13).
